# EUROPEAN PATENT APPLICATION

(11) **EP 3 503 461 A1**
(43) Date of publication of application: **26.06.2019**
(21) Application number: 17209666.1
(22) Date of filing: 21.12.2017
(51) Int. Cl.: H04L 9/08, H04L 7/00, H04L 9/12

(54) **QKD SYNCHRONIZATION APPARATUS AND METHOD**

(71) Applicant: ID Quantique S.A., 1227 Carouge (CH)
(72) Inventor: LEGRÉ, Matthieu, 74140 Veigy-Foncenex (FR); Walenta Nino, 1205 Genève (CH)
(74) Representative: KATZAROV S.A.

(57) **Abstract**

The present relates to a QKD synchronization apparatus comprising an emitter (300), a receiver (400), a quantum channel (600) for transmitting quantum states or particles between the emitter and the receiver and a service channel (500) for transmitting classical data between the emitter and the receiver, characterized in that the emitter further comprises a light source (330) for generating an electromagnetic wave to be sent to the receiver through the quantum channel and at least one intensity modulation unit (340, 350) for amplifying or attenuating the intensity of the said electromagnetic wave, and the receiver further comprises a detector (440) for receiving and detecting the electromagnetic wave and a voltage controller (420) adapted to modify the voltage of the detector so as to switch the detector between a linear mode and a quantum detection mode, and wherein upon synchronization the emitter is controlled so as to modulate the intensity of the electromagnetic wave so as to emit a classical light to the receiver through the quantum channel and the receiver is controlled so as to switch the detector into a linear detection mode.

## Description

### Technical Field

The present invention relates to a Quantum Key Distribution synchronization system and more particularly to a Quantum Key Distribution apparatus and method adapted to determine a phase difference between the service and quantum channels.

### Background of the art

Quantum cryptography or Quantum Key Distribution (QKD) is a method allowing the distribution of a secret key between two distant parties, the emitter and the receiver, with a provable absolute security. QKD relies on quantum physics principles and encoding information in quantum states, or qubits, as opposed to classical communication's use of bits. Usually, photons are used for these quantum states. Quantum key distribution exploits certain properties of these quantum states to ensure its security. Those quantum states are sent through the so-called quantum channel (QC). In order to extract the secret keys, the emitter and the receiver collaborate by exchanging classical message through a classical communication channel called service channel (SC).

More particularly, the security of this method comes from the fact that the measurement of a quantum state of an unknown quantum system modifies the system itself. In other words, a spy eavesdropping on a quantum communication channel cannot get information on the key without introducing errors in the key exchanged between the emitter and the receiver thereby informing the user of an eavesdropping attempt.

The encryption devices using this technology enable secure transmission of payload portion of the transmitted data by performing some kind of symmetric encryption using the keys exchanged by QKD. Specific QKD systems are described in published patent application US 5,307,410 to Bennett, and in the article by C. H. Bennett entitled "Quantum Cryptography Using Any Two Non-Orthogonal States", Phys. Rev. Lett. 68, 3121 (1992).

For practical implementations of QKD systems, the synchronization of both a quantum communication channel (QC) and a service channel (SC) is crucial, where synchronization of a channel consists in sampling the detector of the receiver, exactly when the signal arrives. In other words, the synchronization of the channels means knowing precisely when the bit number "n" is expected to arrive to the receiver. This timing is very important because it defines when the receiver samples its detector output to determine the value of this bit number "n". If there is a problem with the synchronization, the receiver might consider the value of the m^{th} bit sent by the emitter as the nth bit. Hence, a proper synchronization of a communication channel is needed in order to perform proper communication.

In the case of the service channel, since it is a conventional communication channel, conventional synchronization techniques may be employed, such as data and clock recovery technique. In fact, in non-quantum systems, the synchronization is usually performed with clock and data recovery circuits (CDR), as in the case of USB, SATA, and ETHERNET connections. With CDR techniques, the clock signal, which provides the timing necessary to allow digital circuitry to operate on digital data, is transmitted along with the data. Therefore, it is typical for fiber optic communication links to require that clock signal, at the receiving end of the link, is extracted from the incoming data signal. In order to extract such clock signal at the receiving end, clock and data recovery circuits are employed. Conventional clock and data recovery circuits implement phase-lock loops (PLL), of which a full description is reported in US Patent 6,834,367. These kinds of technology are possible on the service channel because it is implemented with classical communication devices that have an error rate of almost zero (<10⁻¹²). This means that when a bit is emitted, it will be detected for sure by the receiver.

However, CDR techniques are inefficient for synchronization in communication with single photons such as in a QKD Quantum Channel. This issue is described in several sources, as for example US patent application 2012/0294625. The synchronization of the quantum communication channel is much more complicated because the bit value carriers travelling in this channel are single quantum particles like single photons (e.g. qubits). The single photon can be absorbed by the propagating medium during the transmission. This leads to a statistical behavior on the quantum receiver side. Three output values are possible, i.e. "1", "0", and "no detection". The fact that through a quantum channel one can get a result "no detection" makes the synchronization techniques used for classical communication channels unusable. This issue is also reported in US Patent 8,755,687. Therefore, so far, QKD apparatus have been equipped with three channels, one of which is fully dedicated to the synchronization of the quantum channel.

Different descriptions of approaches of QKD apparatus implementing 3 channels are proposed in US patents 5.768.378 / 6.834.367 / 7.539.314 / 7.869.599 / 8.050.566 / 8.755.687 as well as published US patent applications 2006/0018475 and 2012/0294625 and non-patent literature: (i) A. Rubenok, J. A. Slater, P. Chan, I. Lucio-Martinez, and W. Tittel, Real-world two-photon interference and proof-of-principle quantum key distribution immune to detector attacks, arXiv:1304.2463v1 (2013); *(ii)* M. Sasaki, M. Fujiwara, H. Ishizuka, W.Klaus & al., Field test of quantum key distribution in the Tokyo QKD Network (2011); *(iii)* X. F. Mo, I. Lucio-Martinez, P. Chan, C. Healey, S. Hosier, W. Tittel, Time-cost analysis of a quantum key distribution system clocked at 100MHz (2011); *(iv)* A. Tanaka, M. Fujiwara, S.W Nam, Y. Nambu, S. Takahashi, W Maeda, K. Yoshino, S. Miki & al., Ultra-fast quantum key distribution over a 97km installed telecom fiber with wavelength division multiplexing clock synchronization (2008). The present invention relates to and improves methods described in the abovementioned literature. Very recently, in EP patent 3,018,840 A1, it has been proposed a QKD system and method to perform the synchronization of the quantum channel without using an additional channel (i.e. a synchronization channel) and by linking the frequency of both the quantum and the classical channels.

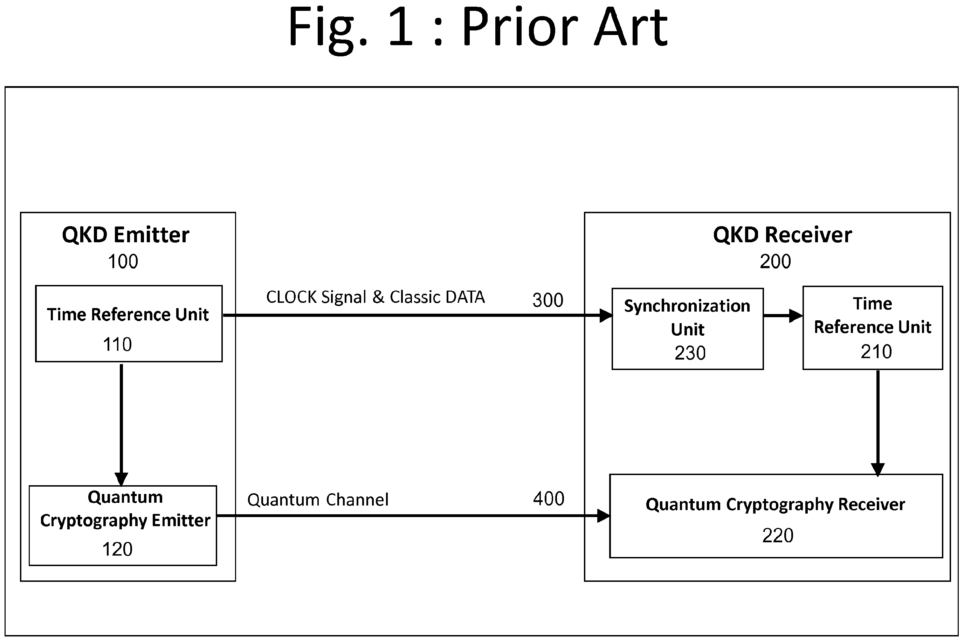

Figure 1 schematically illustrates the QKD apparatus, according to EP patent 3 018 840 A1, comprising a QKD emitter 100 and a QKD receiver 200, which are connected through two channels, a service channel 300, which transports clock signal and classic data, and a quantum channel 400 transporting the quantum particles, i.e. qubits. The QKD emitter 100 is composed by two subsystems, a time reference unit 110 and a quantum cryptography emitter 120. The time reference unit 110 provides the clock signal to the quantum cryptography emitter 120, and is responsible for sending the clock frequency to the QKD receiver 200 through the channel 300. The quantum cryptography emitter 120 generates raw keys by emitting qubits that are sent to the QKD receiver 200 through the quantum channel 400. At the receiver's side 200, the synchronization unit 230 is responsible for extracting the clock signal from the incoming data signal. This is achieved by using common clock and data recovery circuits. Afterwards, the clock signal is sent to the time reference unit 210, which shares the same frequency reference of the QKD emitter, and sends the clock signal to the quantum cryptography receiver 220. This apparatus allows quantum channel 400 to share the same frequency clock than service channel 300. The quantum cryptography receiver 220 is responsible for generating raw keys from the received qubits.

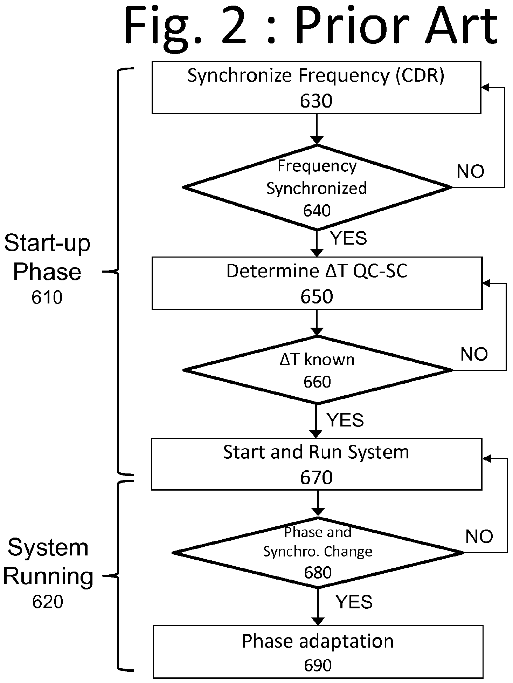

With this procedure, the QKD emitter 100 and the QKD receiver 200 are synchronized in frequency with the clock signal of the service channel 300. This frequency synchronization represents the step 630, within the start-up phase 610, as reported in Figure 2, which illustrates a method for QKD synchronization, according to the EP patent 3,018,840 A1. The start-up phase 610 shows the steps necessary for the synchronization, when starting up the system for first use. After the frequency synchronization step 630, which has been fully described before, the system has to be synchronized in phase, i.e. it is necessary to know the time delay between the propagation of quantum states through the quantum channel and classical optical pulses sent through the service channel 650. There are common techniques for performing phase synchronization, an example is reported in US patent 7,539,314. Once, the delay is calculated 670, the start-up phase is over, and the system is synchronized in frequency and phase, which means that the receiver performs the sampling of the detector exactly when qubits arrive and it knows which qubit is detected (e.g. the m^{th} from the start of the qubit emission). However, this technique cannot guarantee a continuous synchronization of the quantum communication channel because of fluctuations of the quantum particles due, for example, to thermal and/or strain fluctuations of the fiber, leading to a variation of its optical length. To overcome these issues, the system running phase 620 performs a continuous tracking of the quantum communication channel synchronization, by means of an oversampling method. In fact, by oversampling the detections, an analysis of the probability of detection in temporal gates where no qubits are supposed to impinge the detector allows to extrapolate a phase mismatch. At this point, the phase can be corrected with a phase adaptation 690, and the system is kept synchronized while running.

However, with the current techniques, the start-up phase usually takes 15 to 30 minutes because it is a statistical process that requires quite long integration time. This time value is not an issue when the QKD apparatus is started only once during its lifetime, but it represents a lot of time when this QKD apparatus experience regular significant changes of its quantum and service channels. This happens for example in the case of one emitter switching between two receivers frequently or in the case of a QKD system embedded in a satellite exchanging keys between one or more ground stations. Due to this statistical behaviour, it is not possible to accelerate the synchronization process that much and reduce its duration to allow QKD advanced applications. Therefore, there is a need for a QKD apparatus, and method able to perform fast initial phase determination of the QC within the synchronization process, e.g. in a range below 1 second.

A technical problem to solve is to reduce the time necessary for the phase determination during the start-up phase of QKD device synchronization, in order to allow advanced applications of the QKD, which are unfeasible with current QKD implementations.

A technical problem to solve is to develop a QKD synchronization apparatus, which enables a fast synchronization.

### Summary of the invention

In this regard, a primary object of the invention is to solve the above-mentioned problems and more particularly to provide an apparatus and a method for performing the phase determination (i.e. step 650), which is much faster and allows the start-up synchronization of QKD systems with one tenth of the time that is currently needed. For those skilled to the art, it will be clear that such solution can have a particular advantage for implementations exploiting multiple QKD nodes (e.g. one Emitter exchanging keys with multiple Receivers), where synchronization may be particularly critical and should take only few seconds. According to the present invention, during the start-up synchronization phase, common CDR techniques are exploited.

It is important to note that this invention applies to both free-space QKD and ground QKD. Although these are conventional terms, it is reminded that free-space QKD refers to any QKD communication without optical fibres such as communication with satellites, drones, whereas ground QKD refers to communication through fibres.

Basically, the invention exploits the possibility of using the quantum channel in a classic mode to accelerate the synchronization process. Here, classic mode means that intense optical pulses are transmitted through the quantum channel. With the QKD apparatus and method of the present invention we obtain a reduction of the synchronization time of a factor of 10.

The present invention relates to a QKD synchronization apparatus and a QKD synchronization method of synchronizing two transmission channels between a transmitter and a receiver, one being a quantum channel transmitting quantum key signals and the other, a service channel transmitting information data signals. In QKD communication, the synchronization comprises two parameters to synchronize, the frequency and the phase. In the present invention, the synchronization focuses on the phase alignment.

With the present invention, one can perform a start-up phase synchronization of the quantum channel without introducing an *ad hoc* synchronization channel, but instead by transmitting intense laser pulses (i.e. outside single-photon regime) through quantum channel.

The general idea of the invention relies on the adaptation of a QKD apparatus to permit the quantum channel to transport classic signal in addition to single-photon modes.

Essentially, the QKD emitter needs to be equipped with at least one intensity modulation unit such as attenuators or amplifiers, whose role is to adapt the intensity of the light transmitted through the quantum channel, in order to switch between the classic and quantum mode. At the QKD receiver's side, the insertion of a voltage controller enables to control the mode of the detector, in that way the detector is capable of detecting light in both the classic and quantum regimes. In particular, the voltage controller controls the V_{bias} of the detector. By changing the V_{bias} above/below a breakdown voltage, which can range from 50 to 80 Volts according to the detector, the detector is switched from the quantum mode, typical of the single-photon regime (quantum), to the linear mode used for detecting classic light pulses (classical). Such a switching is completely reversible, in fact, after the start-up synchronization, the detector is switched back to the single-photon regime, and the attenuators, at the receiver's side, are set back to maximal attenuation to send single-photon pulses.

When classical signal is transmitted through the quantum channel, such signal is exploited with a suitable communication protocol, in order to proceed with the synchronization with a 100% of detection probability. The main advantage of this solution relies on providing a faster QKD system synchronization, more than 10 times faster than usual QKD synchronization methods.

In some embodiments, the QKD emitter is equipped with two variable optical attenuators to ensure an accurate switching from classic and quantum regimes, however, it preferably comprises only one variable optical attenuator with a dynamic attenuation such as to ensure an accurate switching from classic to quantum regimes. In some embodiments, one variable attenuator and one constant one are implemented. As explained above, the invention is not limited to the attenuators since it can comprise amplifiers instead.

### Brief description of the drawings

Further particular advantages and features of the invention will become more apparent from the following non-limitative description of at least one embodiment of the invention which will refer to the accompanying drawings, wherein
Figure 1 schematically illustrates a quantum key distribution system of the prior art.
Figure 2 schematically illustrates a method for synchronizing the QKD system of the prior art,
Figure 3 schematically illustrates a QKD synchronization apparatus according to a first embodiment of the invention.
Figure 4 schematically illustrates a QKD synchronization method according to the first embodiment of the invention.
Figure 5 schematically illustrates a QKD network according to a second embodiment of the invention.

### Detailed description of the invention

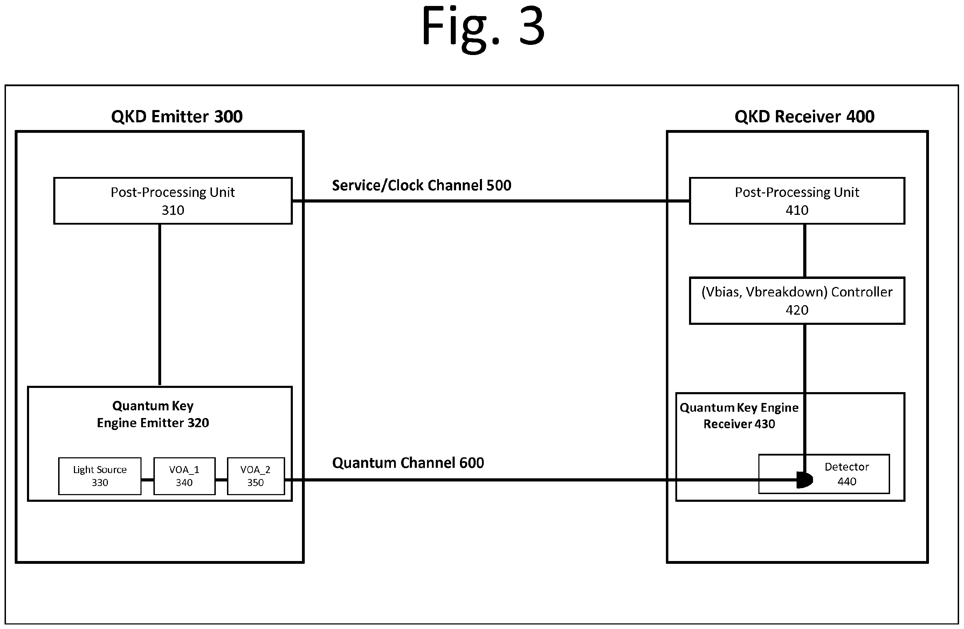

The present detailed description is intended to illustrate, based on figures 3 to 5, the invention in a non-limitative manner since any feature of an embodiment may be combined with any other feature of a different embodiment in an advantageous manner.

Figure 3 schematically illustrates a QKD invention apparatus according to a first embodiment of the invention.

In the apparatus of the present invention, a QKD emitter 300 is connected to a QKD receiver 400 via two communication channels, respectively the service channel 500 and the quantum channel 600. The QKD Emitter 300 comprises a post-processing unit 310 and a quantum key engine emitter 320.

The post-processing unit 310 adapts and controls the settings of the at least one intensity modulation unit 340, 350 which preferably consists in two variable optical attenuators VOA_1 340 and VOA_2 350 (this embodiment is shown in the following description), more preferably one single variable attenuator with a dynamic attenuation able to modify the intensity of the light from a classic mode to a quantum mode, and vice versa. In other embodiments, a variable attenuator and one constant attenuator are exploited. Alternatively amplifiers can be implemented, instead. The intensity modulation units are located inside the quantum key engine emitter 320, in order to switch between the quantum and classical communication modes in the quantum channel 600.

The quantum key engine emitter 320 generates the raw keys, and at this purpose comprises a light source 330. The light source 330 produces the optical pulses, which pass through two variable optical attenuators, VOA_1 340 and VOA_2 350, and, depending on their settings, the intensity of the light coming through the quantum channel 600 is altered so as to be appropriate for quantum communications or classical communications. Note that current off-the-shelf VOA provide a maximum attenuation range of about 60dB. The combination of several VOAs in series is used to guarantee a high precision on the attenuation value over a range large enough to guarantee the working of both modes: the quantum and the classical communication modes.

On the other side, the QKD receiver 400 comprises a post-processing unit 410, a voltage controller 420, and a quantum key engine receiver 430. The post-processing unit 410 has at least two setting parameter values for the voltage controller 420. One value corresponds to a voltage value above the breakdown voltage of the diode allowing this diode to work in quantum mode (or single photon detection mode). The other value corresponds to a voltage value below the breakdown voltage of the diode allowing this diode to work in linear mode (or classical communication mode). Usually, in a QKD apparatus, the avalanche photodiode works only in the quantum mode. Therefore, the post-processing unit preferably has a memory, in which two different parameters settings are registered corresponding to the quantum (V_{bias} > V_{breakdown}) and classic (V_{bias} < V_{breakdown}) communication mode. The voltage controller 420 sets the bias of the detector according to the inputs it receives from the post-processing unit 410. During the synchronization start-up phase the attenuators VOA_1 340 and VOA_2 350 let high intensity pulses go through the quantum channel (600) and the voltage controller 420 applies a voltage on the diode that makes it work in linear mode.

The term intense pulse shall be understood as a pulse of light comprising a number of photon, which renders the created signal classical instead of quantum. The number of photon may range from 1'000 photons per pulse for the most sensitive detectors to about 1 million for more conventional detectors. The invention shall not be limited to a particular number of photons per pulse, but it shall be understood that sending an intense optical pulse instead of a quantum signal guarantees its detection and therefore, permits synchronization with a single pulse. The classical communication mode of a detector normally used for single photon detection has been demonstrated, an example is reported in the arXiv article by L. Lydersen et al arXiv:1008.4593 . In this article it is shown that when the avalanche photodiode works in linear mode, it is possible to generate fake detections with 100% probability of success by sending an optical pulse with an intensity larger than a well-defined value. Under those conditions, we can consider that the detector works in a classical communication mode where all emitted optical pulses are detected by the receiver.

In this case, classic light is transmitted by the quantum channel 600 to the QKD receiver 400. During the synchronization start-up phase classical method for synchronization may be exploited. Whereas, the frequency determination is performed according to prior art, i.e. the frequencies of the QC 600 and the SC 500 are proportional, and CDR methods are performed on the data sent through the SC 500. On the other hand, the classical communication mode can be exploited to speed up the phase determination step in the start-up phase. This can be done by the emission of two synchronous signal sequences by the Post-Processing Unit 310. One signal sequence goes through the SC 500, whereas the other sequence goes through the QC 600. The phase determination is performed by the Post-Processing Unit 410 by measuring the delay time between the time of arrival of one sequence compare to the other one. In principle, because all optical pulses sent through the SC 500 and the QC 600 are detected with a probability of 100%, we can limit the signal sequence to one optical pulse sent in each channel.

At the end of the synchronization start-up phase, the attenuators VOA_1 340 and VOA_2 350 are switched ON to strongly attenuate the light pulses, in a way that the light transmitted through the quantum channel 600 is in the single-photon regime again. Furthermore, when the phase determination in the start-up synchronization phase is achieved, the post-processing unit 410 controls and adapts the bias voltage of the detector in order to switch from a linear to a quantum detection (or Geiger mode).

The quantum key engine receiver 430 generates raw keys by receiving qubits from the quantum communication channel 600. Such qubits are detected by the detector 440 when it is turned into the single-photon detection mode via the voltage controller 420. For the sake of clarification, we note that the modulator necessary for selecting qubits at the emitter's side, and the basis selector at the receiver's side, are not shown in Figure 3.

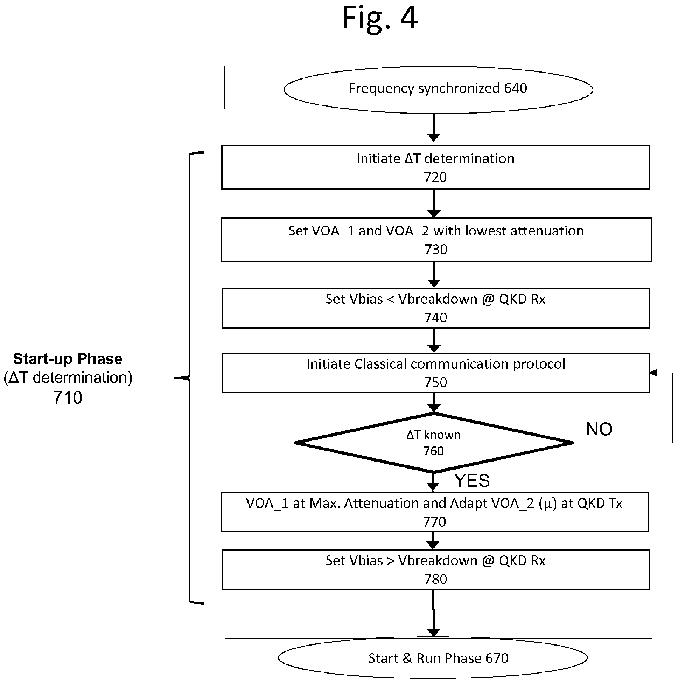

Figure 4 is a flowchart, which schematically illustrates a QKD synchronization method, according to the first embodiment of the present invention.

More particularly, the flowchart of Figure 4 illustrates the steps carried out in the QKD synchronization apparatus described above for the start-up synchronization phase of the two transmission channels (quantum and service channels) between the transmitter and the receiver. After the frequency of the SC and QC has been aligned according to prior art methods, a start-up phase 710 is initiated to enable a system initialization, and determine the time delay ΔT between the QC and SC.

The start-up phase 710 is performed once upon firstly starting/installing the QKD system, or each time when the QKD emitter connects to a different QKD receiver.

According to the present invention, the start-up phase 710 exploits classical communication during which the quantum channel transmits at least one intense optical pulse. When the start-up is over, the quantum channel is switched back to transmit qubits for a quantum communication.

As explained above, the crucial parameter to measure during the start-up phase of synchronization is ΔT, i.e. the time difference, also called the phase, between detection of a signal travelling through the service channel and detection of a signal travelling through a quantum channel of the system. For the sake of clarification, the present invention particularly focuses, with respect to prior art, on a system and method for improving this specific step of the synchronization, i.e. the ΔT determination.

In order to enhance clarity, it is important to understand that the term phase has two different meaning here, one uses it to define a step of the synchronization, it is the start-up phase and we use it to define the ΔT, the phase alignment.

During the start-up phase 710, after the frequency has been aligned, in accordance with step 640, an initialization step 720 is started in order to enable a fast synchronization. At this purpose, the light coming through the quantum channel needs to be intense. For this reason, the two attenuators of the QKD apparatus, VOA_1 and VOA_2 are set with the lowest attenuation 730. Preferably simultaneously, the detector at the receiver's side has to be in the linear mode, so the bias voltage is modified accordingly 740, i.e. the voltage is lowered below the V_{breakdown}.

At this point, the classical communication protocol, and more particularly, a classical synchronization protocol, is initiated and the phase between the quantum and service channels can be aligned 750 by sending an intense pulse, or classical light, through the quantum channel and a classical signal through the service channel and detecting them on the receiver's side and measuring the phase (i.e. the time difference) between the two detections.

The term intense pulse shall be understood as a pulse of light comprising a number of photons, which renders the created signal classical instead of quantum. The number of photons may range from 1'000 photons per pulse for the most sensitive detectors to about 1 million for more conventional detectors. The invention shall not be limited to a particular number of photons per pulse, but it shall be understood that sending an intense optical pulse instead of a quantum signal guarantees its detection and therefore, permits synchronization with a single pulse.

Once the phase is aligned 760 and ΔT is measured, the VOA_1 is set back to the maximum of the attenuation, while VOA_2 is adapted to a value µ to enable a qubit exchange between the emitter and the receiver 770 so as to enable the emitter to emit a quantum signal, e.g .a single photon, again.

At the same time, the detector is switched back into the quantum mode by modifying the voltage of the detector (V_{bias} > V_{breakdown}), in order to have it back in the single-photon mode regime 780.

The quantum communication channel is then synchronized in frequency and phase with the service channel, the start-up phase finishes, and the system running phase is launched according to step 670 of prior art (Figure 2).

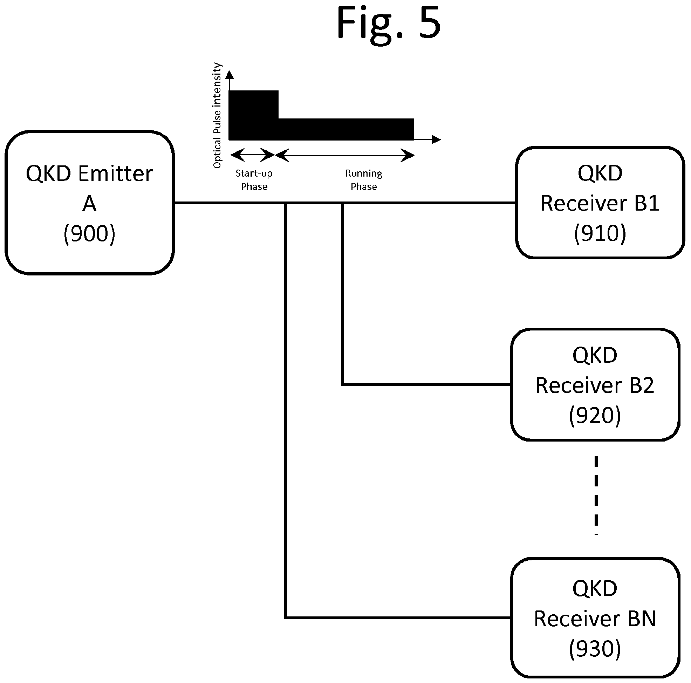

Figure 5 schematically illustrates a QKD network according to a second embodiment of the present invention.

In this embodiment, the QKD network is composed of one QKD Emitter A 900, and a plurality of QKD Receivers B, respectively B1 910, B2 920,..., BN. This network allows the QKD Emitter A 900 to communicate with any one of the QKD Receivers 910, 920, 930, one at a time.

Each time the QKD receiver is changed, for example by switching from QKD Receiver B1 to BN, the method described above is applied. In this way, the start-up phase synchronization of the QKD system is fastened and since synchronization is necessary upon each QKD Receiver switching, an enormous amount of time can be saved. In the Figure, it is also shown the intensity of the signal between the start-up phase and the running phase.

While the above invention has been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This is for example particularly the case regarding the exact number of receivers within the QKD network of the second embodiment of the invention, the number of photons intended for an intense pulse since this depends on the type of detector used or its sensitivity, the number of intense pulses during the start phase or the type of hardware which can be used as long as it achieves the present invention.

## Claims

1. QKD synchronization apparatus adapted to determine a phase difference between a quantum channel (600) and a service channel (500) comprising
an emitter (300) comprising a quantum emitter (320),
a receiver (400) comprising a detector (440),
said quantum channel (600) for transmitting quantum states or particles between the emitter and the receiver and said service channel (500) for transmitting classical data between the emitter and the receiver,
**characterized in that** upon synchronization the quantum emitter (320) is adapted to switch from a quantum mode to a classical mode to send a classical signal to the receiver through the quantum channel and the detector (440) is adapted to switch from a quantum mode to a classical mode to detect said classical signal sent by said quantum emitter (320), in order to determine the phase difference value between said quantum channel (600) and said service channel (500).

2. QKD synchronization apparatus according to claim 1, **characterized in that** said quantum emitter (320) comprises a light source (330) for generating an electromagnetic wave to be sent to the receiver through the quantum channel and at least one intensity modulation unit (340, 350) for modifying the intensity of the said electromagnetic wave from a quantum state to classical light, and
said receiver (400) comprises a voltage controller (420) adapted to modify a voltage of the detector (440) thereby switching the detector between a classical mode and a quantum detection mode.

3. QKD synchronization apparatus according to claim 2, **characterized in that** at least one intensity modulation unit (340, 350) is an attenuator.

4. QKD synchronization apparatus according to claim 3, **characterized in that** the quantum emitter (320) comprises two variable attenuators (340, 350).

5. QKD synchronization apparatus according to claim 3, **characterized in that** the quantum emitter (320) comprises one variable attenuator (340) and one constant attenuator (340, 350).

6. QKD synchronization apparatus according to any one of claims 1 to 5, **characterized in that** both the emitter (300) and the receiver (400) comprise a post-processing unit (310, 410) communicating with each other to respectively control the at least one intensity modulation unit (340, 350) and the voltage controller (420).

7. QKD synchronization apparatus according to any one of claims 1 to 6, **characterized in that** once synchronization is completed, the quantum emitter (320) is controlled so as to modulate the intensity of the electromagnetic wave so as to enable a qubit exchange between the emitter (300) and the receiver (400) through the quantum channel (600) and the quantum receiver (430) is controlled so as to switch the detector (440) into a quantum detection mode.

8. QKD synchronization apparatus according to any one of claims 1 to 7, **characterized in that** the quantum detection mode of the detector (440) is a Geiger mode.

9. QKD synchronization apparatus according to any one of claims 1 to 8, **characterized in that** the voltage controller (420) is adapted to set a bias voltage of the detector (440) above or below a breakdown voltage thereby modifying the detection mode of the detector (440).

10. QKD System comprising the QKD synchronization apparatus of any one of claims 1 to 9.

11. QKD synchronization method for determining a phase difference between a quantum channel (600) and a service channel (500) of the QKD system of claim 10, comprising the steps of
initiating a QKD synchronization (720) for determining a phase difference value between said quantum channel (600) and said service channel (500),
controlling (730) at least one light source of said quantum emitter (320) so as to set an intensity of an emitted electromagnetic wave from a quantum regime to a classical regime,
controlling (740) said detector (440) of said receiver (400) so as to set its working mode from a quantum mode to a classical mode,
initiating (750) a classical communication protocol between the emitter and the receiver through the quantum channel, and
determining (760) the phase difference value between said quantum channel (600) and said service channel (500).

12. QKD synchronization method according to claim 11, **characterized in that** when the phase difference between the quantum channel and the classic channel is determined, the voltage controller (420) of the receiver (400) sets a bias voltage to the detector (440) so as to make it switch to a quantum mode.

13. QKD synchronization method according to claim 11 or 12, **characterized in that** when the phase difference between the quantum channel and the classic channel is determined, the at least one intensity modulation unity (340, 350) is controlled so as to set an intensity of an emitted electromagnetic wave to enable a qubit exchange between the emitter (300) and the receiver (400).

14. QKD synchronization method according to any one of claims 11 to 13, **characterized in that** the intensity modulation and detector mode switching steps are reversible.
